(19)

Europäisches Patentamt

European Patent Office

Office européen des brevets

(11) **EP 4 059 967 A1**

(12) **EUROPEAN PATENT APPLICATION**
published in accordance with Art. 153(4) EPC

(43) Date of publication:
**21.09.2022 Bulletin 2022/38**

(21) Application number: **20886648.3**

(22) Date of filing: **10.11.2020**

(51) International Patent Classification (IPC):
*C08F 8/30* (2006.01)      *C08F 2/24* (2006.01)
*C08F 20/04* (2006.01)      *C09D 5/00* (2006.01)
*C09D 5/02* (2006.01)      *C09D 133/02* (2006.01)
*C09J 133/02* (2006.01)

(52) Cooperative Patent Classification (CPC):
**C08F 2/24; C08F 8/30; C08F 20/04; C09D 5/00;
C09D 5/02; C09D 133/02; C09J 133/02**

(86) International application number:
**PCT/JP2020/041876**

(87) International publication number:
**WO 2021/095716 (20.05.2021 Gazette 2021/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.11.2019 JP 2019204992**

(71) Applicant: **Nippon Shokubai Co., Ltd.
Osaka-shi, Osaka 541-0043 (JP)**

(72) Inventor: **SAITO, Takashi
Kawasaki-shi, Kanagawa 210-0865 (JP)**

(74) Representative: **Winter, Brandl - Partnerschaft
mbB
Alois-Steinecker-Straße 22
85354 Freising (DE)**

(54) **EMULSION COMPOSITION AND PRODUCTION METHOD THEREFOR**

(57)      Provided is an emulsion composition in which the generation of aggregates during production is small, the storage stability is good, and adhesion to substrates, and water resistance and solvent resistance are excellent when used as a paint composition and a primer. The emulsion composition includes amino group-containing polymer particles, which are obtained by modifying carboxyl group-containing polymer particles with alkyleneimine that have been obtained by emulsion polymerization of a monomer component including at least one monomer selected from unsaturated carboxylic acids with a reactive emulsifier.

EP 4 059 967 A1

**Description**

**TECHNICAL FIELD**

The present invention relates to an emulsion composition and a method for producing the same.

**BACKGROUND ART**

A polymer containing an acrylic acid-based or vinyl acetate-based carboxyl group is commercially available in large quantity for applications of adhesives, paints, inks, primers, or the like, and a product form is a solution using a solvent or an aqueous emulsion. Among those, from the viewpoint of simplicity of handling, an improvement in global environment and working environment, and the like, the product form has been rapidly converted to an aqueous emulsion, but the adhesives of an aqueous emulsion were not sufficient for heat resistance and water resistance, and the paints and inks of an aqueous emulsion were insufficient for dispersibility and storage stability of pigments and had low gloss, therefore not being satisfactory.

Therefore, much research has been done and in an adhesive application, as an adhesive which is usable for a long time as an adhesive composition, is curable even at an ordinary temperature, and exhibits more excellent adhesiveness and water resistance, an adhesive composition comprising an amino group-containing polymer emulsion obtained by modifying a polymer emulsion containing carboxyl groups with alkyleneimine and an epoxy group-containing polymer emulsion (JP-S46-30946A) and a two-part liquid aqueous adhesive composition having (a) an aqueous liquid of an amino group-containing polymer in which a polymer containing carboxyl groups is modified with alkyleneimine and (b) a water soluble polyvalent epoxy compound having an average molecular weight of 1000 or less as essential components (JP-H5-117618A) are disclosed.

In applications of paints and inks, for example, as paints or inks which form a film having excellent adhesion to various substrates and high gloss as well as which have good storage stability therefore not causing a separation of pigments even after a long term storage, a water-based coating composition having (A) an amino group-containing polymer emulsion obtained by aminoalkylating a polymer emulsion containing carboxyl groups with alkyleneimine, (B) an adduct obtained by adding an alkylene oxide having 2 to 4 carbon atoms to a polyalkyleneimine having 2 to 4 carbon atoms, and (C) a pigment, as essential components (JP-H6-220395A) is disclosed.

**SUMMARY OF INVENTION**

All the adhesives, paints, and inks described above use an amino group-containing polymer emulsion in which a polymer containing carboxyl groups is modified with alkyleneimine, and exhibit a good performance by compounding a crosslinking agent such as an epoxy compound therewith. However, in any application, since a coat layer formed is discontinuous, the mechanical strength is low, therefore there is a strong need for a further improvement in enhancing adhesion to substrates and moreover, there is also a high demand for an improvement in enhancing storage stability, and water resistance and solvent resistance of the aqueous emulsion.

As an application of a primer, it is known that an amino group-containing polymer emulsion is used alone as a base resin for improving film adhesion. However, it has been confirmed that the adhesive ability gradually decreases when used over time under a high humidity condition, and so the improvement thereof is desired.

On the other hand, a problem that aggregates are generated in a step of producing an amino group-containing polymer emulsion was also confirmed, and there was room for improvement in a method for producing the emulsion.

Therefore, an object of the present invention is to provide an emulsion composition in which the generation of aggregates during production is small, the storage stability is good, and in applications of adhesives, paints, inks, and the like, adhesion to various substrates, and water resistance and solvent resistance are high, and which is useful as a primer for a surface treatment of films and the like.

The present inventor made intensive studies to solve the above-described problems. As a result, the inventor has found that the above-described problems can be solved by an emulsion composition including amino group-containing polymer particles, which are obtained by modifying carboxyl group-containing polymer particles with alkyleneimine that have been obtained by emulsion polymerization of a monomer component including at least one monomer selected from unsaturated carboxylic acids with a reactive emulsifier, and has completed the present invention.

**DESCRIPTION OF EMBODIMENTS**

Hereinafter, the present invention will be described in detail. Note that the present invention is not limited only to the following embodiment.

"X to Y" indicating a range herein means "X or more and Y or less", and "weight", "% by weight", and "part by weight" are treated as synonyms of "mass", "% by mass", and "part by mass", respectively. In addition, unless otherwise specified, the operation, physical properties, and the like are measured under a condition of room temperature (20 to 25°C)/relative humidity of 40 to 50% RH.

<Emulsion composition>

One embodiment of the present invention is an emulsion composition including amino group-containing polymer particles, which are obtained by modifying carboxyl group-containing polymer particles with alkyleneimine that have been obtained by emulsion polymerization of a monomer component including at least one monomer selected from unsaturated carboxylic acids with a reactive emulsifier. In this embodiment, the emulsion composition is an aqueous emulsion composition in which the amino group-containing polymer particles are usually present in a form dispersed in an aqueous medium.

According to one embodiment of the present invention, an emulsion composition is provided in which the generation of aggregates during production is small, the storage stability is excellent, and when used as a paint composition or primer, adhesion to substrates as well as water resistance and solvent resistance is excellent.

Note that "monomer", "monomer mixture", and "monomer or monomer mixture" herein are also called "monomer", "mixed monomer", and "monomer component" or "monomer component", respectively.

(Aqueous medium)

Examples of the aqueous medium include water, and a mixed solvent of a solvent capable of mixing with water (lower alcohol such as methyl alcohol) and water. Among those, in consideration of safety when applying the emulsion composition and any influence on the environment, the water content is suitably 50% by mass or more in 100% by mass of the aqueous medium. The aqueous medium preferably includes water of 70% by mass or more and more preferably water of 100% by mass, that is, water is used as a medium.

The amount of the aqueous medium constituting the emulsion composition of the present invention may be set to 40 to 80% by mass with respect to the total mass of the emulsion composition in consideration of the amino group-containing polymer particles (solid content). Note that the solid content herein can be obtained by the method described in Examples described later.

(Amino group-containing polymer particles)

The amino group-containing polymer particles according to the present invention are obtained by modifying the carboxyl group-containing polymer particles described later with alkyleneimine.

The upper limit of the amine value of the amino group-containing polymer particles is preferably 3.00 mmol/g or less and more preferably 2.00 mmol/g or less from the viewpoint of water resistance and solvent resistance. The lower limit of the amine value of the amino group-containing polymer particle is not particularly limited, but is, for example, 0.10 mmol/g or more. The amine value herein can be obtained by the method described in Examples described later.

The content of the amino group-containing polymer particles constituting the emulsion composition of the present invention may be appropriately set in consideration of the solid content so as to be 20 to 60% by mass when finishing the emulsion composition, and is more preferably 30 to 50% by mass. If the solid content is less than 20% by mass, it is not preferable in terms of productivity and production cost of the emulsion composition of the present invention. In addition, if the solid content exceeds 60% by mass, the viscosity of the emulsion composition increases and the increase of the viscosity affects the uniform dispersion and heat transfer in the entire system, causing an increase in the generation of aggregates, which is not preferable.

The emulsion composition of the present invention exhibits excellent adhesion as paints, inks, or primers as described above. The reason for this is presumed that the amino group included in the structure has a strong interaction with various substituents such as a hydroxyl group, a carboxyl group, a carbonyl group, a silyl group, and a metal on the surface of various substrates, thereby exhibiting a high affinity.

In addition, as to the emulsion composition of the present invention, the generation of aggregates during production is small, the storage stability, and water resistance and solvent resistance are excellent. The reason for this is presumed that the reactive emulsifier is incorporated into the structure of the carboxyl group-containing polymer particles, which allows the emulsion destruction due to pH change to be less likely to occur during or after the reaction with alkyleneimine. It is presumed that, after molding the coating film, since the emulsifier does not elute from the adhesive surface, a continuous coat layer is formed, thereby enhancing the mechanical strength, having excellent water resistance and solvent resistance, and maintaining high adhesion for a long period of time. Note that this mechanism is based on a presumption, and the present invention is not limited to this mechanism at all.

(Carboxyl group-containing polymer particle)

The carboxyl group-containing polymer particle according to the present invention is a precursor for forming the amino group-containing polymer particle according to the present invention, and is obtained by emulsion polymerization of a monomer component including at least one unsaturated carboxylic acid as a constituent component and a reactive emulsifier in the aqueous medium. As a constituent component of the carboxyl group-containing polymer particle, an ethylenically unsaturated monomer can be combined in addition to an unsaturated carboxylic acid.

Examples of the unsaturated carboxylic acid include a monocarboxylic acid such as (meth)acrylic acid, cinnamic acid, and crotonic acid, and an unsaturated dicarboxylic acid such as itaconic acid, maleic acid, and fumaric acid. These can be used alone or in combination of two or more thereof, but the use of (meth)acrylic acid is preferable from the viewpoint of polymerizability and simplicity of handling.

Examples of the ethylenically unsaturated monomer include a (meta) acrylic acid alkyl ester such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, and n-hexyl (meth)acrylate, an unsaturated acid anhydride such as maleic anhydride and itaconic anhydride, a (meta)acrylic acid hydroxyalkyl ester such as 2-hydroxyethyl (meta)acrylate and 2-hydroxypropyl (meta)acrylate, an aromatic vinyl compound such as styrene and $\alpha$-methylstyrene, a nitrogen-containing unsaturated compound such as (meta)acrylonitrile, a vinyl ester-based monomer such as vinyl acetate and vinyl propionate, a vinyl ether-based monomer such as vinyl methyl ether, vinyl ethyl ether, vinyl isobutyl ether, and vinyl phenyl ether, an unsaturated amide such as (meth)acrylamide and N-methylol (meth)acrylamide, and a (meth)acrylate ester including polyalkylene oxide skeleton. These may be used alone or in combination of two or more thereof.

The monomer component according to the present invention preferably includes (meth)acrylic acid and at least one selected from the group consisting of methyl (meth)acrylate, butyl (meth)acrylate and styrene, and more preferably includes (meth)acrylic acid, methyl (meth)acrylate, butyl (meth)acrylate, and styrene.

Note that "(meth)acrylic acid" herein means "acrylic acid" and/or "methacrylic acid".

The amount of carboxyl group (content of carboxyl groups) included in the carboxyl group-containing polymer particles is preferably 0.3 to 3.0 mmol/g. Therefore, the monomer may be compounded so that the content of carboxyl groups is 0.3 to 3.0 mmol/g. The content of carboxyl groups is more preferably 0.4 to 2.5 mmol/g and still more preferably 0.5 to 2.0 mmol/g. Note that the content of carboxyl groups herein can be obtained by the method described in Examples described later.

If the content of carboxyl groups is less than 0.3 mmol/g, the adhesion becomes poor in each application. Moreover, if the content of carboxyl groups per solid content exceeds 3.0 mmol/g, there are some disadvantages that the dispersion stability of the emulsion becomes poor and the water resistance and solvent resistance deteriorate when forming a film or a coating layer.

(Reactive emulsifier)

As the reactive emulsifier according to the present invention, an anionic emulsifier or nonionic emulsifier having a polymerizable group, or the like is suitable, and one member or two or more members can be used. Among those, an emulsifier having a polymerizable group such as a vinyl group, an allyl group, a (meth)acryloyl group, and a propenyl group is preferable.

As the anionic reactive emulsifier, one member or two or more members of a reactive anionic emulsifier, a sulfosuccinate-type reactive anionic emulsifier, an alkenyl succinate-type reactive anionic emulsifier, and the like can be used. Examples of the commercially available product of sulfosuccinate-type reactive anionic emulsifier include LATEMUL S-120, S-120A, S-180, and S-180A (all trade names, manufactured by Kao Corporation), ELEMINOL JS-20 (formerly, ELEMINOL JS-2) (trade name, manufactured by SANYO CHEMICAL INDUSTRIES, LTD.), and ADEKA REASOAP SR-10, SR-20, and SR-30 (manufactured by ADEKA Corporation). Examples of the commercially available product of the alkenyl succinate-type reactive anionic emulsifier include LATEMUL ASK (trade name, manufactured by Kao Corporation). Moreover, a sulfate ester (salt) having an allyl group such as (meth)acrylic acid polyoxyethylene sulfonate (for example, "ELEMINOL RS-3000 (formerly, ELEMINOL RS-30)" manufactured by SANYO CHEMICAL INDUSTRIES, LTD. and "Antox MS-60" manufactured by NIPPON NYUKAZAI CO., LTD.) and allyloxymethylalkyloxypolyoxyethylene sulfonate (for example, "Aqualon KH-05" and "Aqualon KH-10" manufactured by DKS Co. Ltd.), polyoxyalkylene alkenyl ether ammonium sulfate (for example, "LATEMUL PD-104" manufactured by Kao Corporation), and the like can also be used.

As the nonionic reactive emulsifier, one member or two or more members of nonionic emulsifier having reactivity such as allyloxymethylalkoxyethyl hydroxypolyoxyethylene (for example, "ADEKA REASOAP ER-20" manufactured by ADEKA Corporation) and polyoxyalkylene alkenyl ether (for example, "LATEMUL PD-420" and "LATEMUL PD-430" manufactured by Kao Corporation) can be used.

The amount of the reactive emulsifier used is preferably 2.0 to 10 parts by mass and preferably 3.0 to 6.0 parts by mass with respect to 100 parts by mass of the monomer component. If the amount of the emulsifier used is less than 2.0 parts by mass, polymerization is difficult, and even if polymerization can be carried out, the dispersion stability of the emulsion particles becomes poor, and the particle size becomes large, thereby the adhesion becomes poor. Moreover, if the amount of the reactive emulsifier used exceeds 10 parts by mass, water resistance and solvent resistance, adhesion, and stability become poor.

The reasons why the use of the reactive emulsifier allows emulsion stability of the emulsion, water resistance and solvent resistance of paints, inks, and the like, and adhesion to substrates to be enhanced are presumed as follows, but are not limited thereto. Since anionic, cationic, and nonionic emulsifiers that are non-reactive emulsifiers generally form an emulsion by relatively weak physical action such as hydrophobic interaction with the polymer that is a subject to be dispersed, dissociation due to external shock is likely to occur. In particular, it is presumed that when a compound having a highly polar substituent such as a carboxyl group or an amino group is a subject to be dispersed, the emulsion destruction occurs by a shock such as pH change, the emulsifier is eluted into water or a solvent and the emulsion particles become large, therefore the aggregates are generated, and adhesive force to the substrate and water resistance and solvent resistance deteriorate. On the other hand, in a case of a reactive emulsifier, since the emulsifier stably forms a covalent bond with the polymer that is a subject to be dispersed, the generation of aggregates during production is suppressed and moreover, the emulsion fine particles are maintained by enhancing the emulsion stability of the emulsion. Therefore, it is presumed that sufficient adhesion is exhibited to various substrates and water resistance and solvent resistance are enhanced.

A non-reactive emulsifier can be used together with the above reactive emulsifier. As the amount of the non-reactive emulsifier used, the total amount of the reactive emulsifier and the non-reactive emulsifier may be 2.0 to 10.0 parts by mass and is preferably 3.0 to 6.0 parts by mass with respect to 100 parts by mass of the monomer component. Among the above amount, the quantitative proportion of the reactive emulsifier used may be compounded so as to be 20% by mass or more, and the quantitative proportion of the reactive emulsifier used is preferably 50% by mass or more. If the proportion of the reactive emulsifier used is less than 20% by mass, water resistance and solvent resistance, adhesion, and stability become poor.

As the non-reactive emulsifier, a well-known emulsifier used during usual emulsion polymerization can be used. For example, various emulsifiers such as an anionic emulsifier, a nonionic emulsifier, a cationic emulsifier, and an amphoteric ionic emulsifier can be used. Examples of the anionic emulsifier include dialkyl sulfosuccinate, alkylbenzene sulfonate, alkyl sulfate, polyoxyethylene alkylphenyl ether sulfate, polyoxyethylene alkyl diphenyl ether sulfate, polyoxyethylene alkyl ether sulfate, alkyl diphenyl ether disulfonate, and a polymer emulsifier. Further, examples of the nonionic emulsifier include a polyoxyethylene higher alcohol ether, a polyoxyethylene alkyl phenyl ether, a polyoxyethylene alkyl diphenyl ether, a polyoxyethylene-polyoxypropylene block copolymer, an acetylene diol-based emulsifier, sorbitan higher fatty acid esters, polyoxyethylene sorbitan higher fatty acid esters, polyoxyethylene higher fatty acid esters, glycerin higher fatty acid esters, a polycarboxylic acid-based polymer emulsifier, and a polyvinyl alcohol. In addition, examples of the cationic emulsifier include alkyl(amide)betaine and alkyldimethylamine oxide. Examples of the special emulsifier include a fluorine-based emulsifier and a silicone-based emulsifier. Only one of these emulsifiers may be used, or two or more thereof may be used in combination.

(Polymerization initiator)

A polymerization initiator may be used during the emulsion polymerization of the monomer component and the reactive emulsifier. Examples of the polymerization initiator include a persulfate such as potassium persulfate and ammonium persulfate, a peroxide such as hydrogen peroxide, benzoyl peroxide, and tert-butyl hydroperoxide, and an azo compound such as azobisisobutylnitrile, but the present invention is not limited to only such examples. Preferably, a water-soluble initiator such as potassium persulfate and ammonium persulfate and a water-soluble redox-type initiator system are suitable. These polymerization initiators may be used alone or in combination of two or more thereof. In addition, in order to adjust the molecular weight of the polymer, a well-known and commonly used chain transfer agent such as various alcohols (catechols) and thiols may be used.

As a method of adding the polymerization initiator, as described later, two methods in which a method of adding a part of a predetermined amount to a reactor in advance and continuously adding the remaining part during the emulsion polymerization (continuous addition) and a method of intermittently adding (intermittent addition) can be used and either one of them or a combination thereof can be used.

(Alkyleneimine)

As alkyleneimine used in the present invention, for example, ethyleneimine, propyleneimine, butyleneimine, and the like can be used. N-(2-aminoalkyl) substituted alkyleneimine such as N-(2-aminoethyl)aziridine, N-(2-aminopropyl)aziridine, and N-(2-aminoethyl)propyleneimine can also be used in the same manner. The alkyleneimine is preferably ethyleneimine and propyleneimine, and more preferably ethyleneimine.

As the amount of alkyleneimine, an equivalent amount (equivalent ratio) of the alkyleneimine to an equivalent amount of carboxyl groups contained in the carboxyl group-containing polymer particles may be 0.5 to 2.0, and preferably 0.8 to 1.5. If the equivalent ratio is less than 0.5, adhesion to substrates become poor. In addition, if the equivalent ratio exceeds 2.0, the water resistance becomes poor.

<Method for producing emulsion composition>

One embodiment of the present invention is a method for producing an emulsion composition, comprising the steps of: emulsion-polymerizing a monomer component including at least one monomer selected from unsaturated carboxylic acids with a reactive emulsifier to prepare carboxyl group-containing polymer particles and modifying the carboxyl group-containing polymer particles with alkyleneimine to prepare amino group-containing polymer particles.

The method for producing an emulsion composition of the present invention will be described, but the present invention is not limited to the following.

(Step for preparing carboxyl group-containing polymer particles)

In the step for preparing carboxyl group-containing polymer particles, the monomer component including at least one monomer selected from unsaturated carboxylic acids are emulsion-polymerized with the reactive emulsifier.

In this step, in order to emulsion-polymerize the monomer component, first, the monomer component and the reactive emulsifier are mixed and stirred in the aqueous medium and added into a reactor as a dispersed pre-emulsion, or the aqueous medium, the monomer component, and the reactive emulsifier are added into a reactor independently. When the pre-emulsion including a predetermined amount of the monomer component or a predetermined amount of the monomer component is added into a reactor, a batch addition method in which the predetermined amount is collectively added and a split addition method in which the predetermined amount is divided, a portion thereof is added, and a remaining portion is added during the polymerization reaction, are included, but the split addition method is preferable from the viewpoint of controlling the temperature during the polymerization reaction.

In the above-mentioned split addition method, as a method for adding the remaining portion, a method of continuously adding the pre-emulsion or the monomer component to the reactor (continuous addition) and a method of intermittently adding the pre-emulsion or the monomer component in several times (intermittent addition) can be included, and the continuous addition and the intermittent addition may be used in combination. In both continuous addition and intermittent addition, a portion of the pre-emulsion or the monomer component, water and the reactive emulsifier, and a predetermined portion of the polymerization initiator are usually added to the reactor in advance and the remaining monomer component is added thereto. When the monomer component is added, the remaining portion of the polymerization initiator is also added at the same time. In order to control the temperature during the polymerization reaction, either the continuous addition method or the intermittent addition method can also be used at the addition of the polymerization initiator, and they may be used in combination.

In this way, the emulsion containing carboxyl group-containing polymer particles can be prepared.

The rate at which the monomer component is added is determined in consideration of a reaction rate of polymerization, a volume of a polymerization vessel, and a heat removal capacity of a cooling device from the viewpoint of suppressing a rapid reaction to control the reaction. Usually, it is preferable to add at an addition rate such that the addition is completed so that the polymerization time is 0.5 to 20 hours, more preferably 2 to 10 hours.

In this step, the temperature of a reaction solution during the emulsion polymerization is preferably 60 to 95°C and more preferably 70 to 90°C. If the temperature of the reaction solution is lower than 60°C, the polymerization time becomes longer and the production efficiency is lowered, resulting in it being uneconomical. In addition, if the temperature of the reaction solution exceeds 95°C, an evaporation of the aqueous medium or the collapse of the emulsion due to a heat load occur and the generation of aggregates in the reaction solution increases, therefore not being preferable.

In order to remove the reaction heat in the emulsion polymerization, a heat medium such as hot water, steam, and heated oil is used, as needed. The upper limit temperature of the heat medium is preferably 120°C or lower, and more preferably 100°C or lower. If the temperature of the heat medium exceeds 120°C, a heat load is locally applied to the reaction solution and the generation of aggregates increases, therefore not being preferable.

In this step, aging is performed after the emulsion polymerization. The purpose of the aging is to reduce the concentration of the unreacted monomer component in the reaction solution after the addition of the predetermined amount of the monomer component is completed, the aging means that the concentration of the monomer component remaining in the reaction solution is preferably 1% by mass or less, and the temperature of the reaction solution is usually kept at 60 to 95°C. If the temperature is lower than 60°C, the reaction rate of the monomer component decreases, therefore the time required to complete the aging becomes longer, which is not preferable from the viewpoint of productivity and production cost. In addition, if the temperature exceeds 95°C, the collapse of the emulsion occurs due to an evaporation of the solvent or a heat load, and the generation of aggregates in the reaction solution is increased, therefore not being preferable. The aging time is usually 1 to 5 hours and preferably 2 to 3 hours.

The pressure during the polymerization may be any of normal pressure, reduced pressure, or pressurization, and the polymerization is carried out usually at 0 to 10 MPaG, and preferably at 0 to 2 MPaG. The aging of the reaction solution is usually carried out at 0 to 10 MPaG and preferably at 0 to 2 MPaG. Here, MPaG (megapascal gauge) refers to a gauge pressure.

The reactor used for the polymerization reaction and the aging treatment is not particularly limited, but is equipped with a stirrer for heat removal, diffusion, and reaction promotion so as not to generate aggregates during the polymerization, and those equipped with a thermometer and a cooling device for controlling the reaction are suitably used.

(Step for preparing amino group-containing polymer particle)

In the step of preparing amino group-containing polymer particles, the carboxyl group-containing polymer particles prepared above are modified by alkyleneimine.

That is, the amino group-containing polymer particles according to the present invention can be obtained by adding alkyleneimine to an emulsion including carboxyl group-containing polymer particles, subjecting the mixture to an aminoalkylation (for example, aminoethyl) reaction, and modifying the resultant with alkyleneimine.

The above addition of alkyleneimine includes two methods of a method for continuously adding alkyleneimine to a reaction vessel containing an emulsion including carboxyl group-containing polymer particles (continuous addition) and a method for intermittently adding alkyleneimine in several times dividedly (intermittent addition), and either one or a combination thereof can be used.

Upon adding alkyleneimine, when foaming or thickening due to a neutralization reaction with carboxylic acid or the generation of aggregates due to pH change occurs, alkyleneimine diluted with water in advance can also be used for the purpose of slowing down the reaction. In addition, in order to suppress the foaming and thickening described above, a silicone-based, polyether-based, or mineral oil-based deforming agent, or the like that is well-known and commonly used can be added, or an ammonia aqueous solution can also be added before the addition of alkyleneimine to partially neutralize a portion of carboxylic acid.

In this step, the temperature of the reaction solution upon reacting the carboxyl group-containing polymer particles with alkyleneimine is preferably 25 to 80°C and more preferably 30 to 70°C. If the temperature of the reaction solution is less than 25°C, the reaction time of alkyleneimine becomes longer, therefore being uneconomical. In addition, if the temperature of the reaction solution exceeds 80°C, the pH change due to a rapid reaction with alkyleneimine occurs in addition to the heat load, thereby occurring the collapse of the emulsion, resulting in increasing the aggregates in the reaction solution.

In this step, in order to remove heat of reaction, a heat medium such as hot water, steam, or heated oil may be used for the cooling device equipped in the reactor, as needed. The upper limit temperature of the heat medium is preferably 100°C or lower and more preferably 90°C or lower. If the temperature of the heat medium exceeds the above-mentioned temperature, a heat load is locally applied to the reaction solution and the aggregates increase, therefore not being preferable.

In this step, the aging means that the concentration of alkyleneimine remaining in the reaction solution becomes preferably 100 ppm or less after the addition of alkyleneimine is completed, and the reaction solution is subjected to the aging at 50 to 70°C. If the temperature is lower than 50°C, the reaction of alkyleneimine is slowed down, thereby the time required to complete the aging becomes longer, which is not preferable from the viewpoint of productivity and production cost. In addition, if the temperature exceeds 70°C, the collapse of the emulsion due to a heat load occurs, resulting in increasing aggregates in the reaction solution. The aging time is usually 1 to 5 hours and preferably 2 to 3 hours.

The pressure during aminoalkylation (for example, aminoethyl) reaction may be any of normal pressure, reduced pressure, or pressurization, and the aminoalkylation reaction is carried out usually at 0 to 10 MPaG, and preferably at 0 to 2 MPaG. The aging of the reaction solution is usually carried out at 0 to 10 MPaG and preferably at 0 to 2 MPaG. Here, MPaG (megapascal gauge) refers to a gauge pressure.

The reactor used for the reaction of alkyleneimine and the aging treatment is not particularly limited, but a reactor is usually used in which a stirrer for heat removal, diffusion, and reaction promotion is equipped so as not to generate aggregates during the polymerization, and a thermometer and a cooling device for controlling the reaction are equipped.

<Application of emulsion composition>

Industrially, the emulsion composition of the present invention can be widely used for applications including a primer for paper, cloth, fiber and OPP, a PET film, or the like, an adhesion improvement of an aqueous adhesive such as EVA, a cross-linking agent of an epoxy resin, an adhesion improvement of ethylene vinyl acetate copolymer (EVA), polyvinyl acetate (PVAc), and polyvinyl alcohol (PVA), a pressure-sensitive adhesive modification, an adhesion improvement of paints, dispersants for pigments or the like, a surface modification of glass and carbon fibers, a wood preservative, an anti-slip agent for a polyvinyl acetal-based film, an enhancement in heat resistance and oil resistance of thermoplastic polymers such as polyamide, polyacetal, polyolefin, polyester, PVC, and polycarbonate, an antistatic agent of polyolefin, and a cross-linking agent of a polymer having a cyclic acid anhydride group. Especially, the emulsion composition of the present invention is suitably used for applications of a primer for an OPP film, a PET film, or the like, an aqueous adhesive such as EVA, a cross-linking agent of an epoxy resin, a pressure-sensitive adhesive such as ethylene vinyl acetate copolymer (EVA), polyvinyl acetate (PVAc), and polyvinyl alcohol (PVA), and paints.

EXAMPLES

Hereinafter, the present invention will be specifically described with reference to Examples, but the present invention is not limited thereto. Note that although the indication of "parts" or "%" is used in Examples, it represents "parts by mass" or "% by mass", respectively, unless otherwise specified.

(Method for measuring content of carboxyl groups)

$$\text{Content of carboxyl groups (mmol/g-s)} = (a/b \times 1000)/(c \times d/100)$$

　　a: Charged amount of unsaturated carboxylic acid (g)
　　b: Molecular weight of unsaturated carboxylic acid (g/mol)
　　c: Finished amount of emulsion including carboxyl group-containing polymer particles (g)
　　d: Amount of carboxyl group-containing polymer particles (solid content) (% by mass)

(Method for measuring amino group-containing polymer particle (solid content))

About 1 g of the emulsion composition was weighed (a), the residue after drying by a ventilation dryer at 155°C for 30 minutes was then measured (b), and the solid content was calculated from the following formula. A weighing bottle was used for the measurement. Other operations were carried out in accordance with JIS K 0067-1992 (Test methods for loss and residue of chemical products).

$$\text{Solid content (\%)} = (b/a) \times 100$$

(Method for measuring amine value)

About 0.5 g of the emulsion composition is weighed (a), about 100 ml of pure water is then added thereto, and the mixture is mixed well to make a uniform solution. About 0.1 ml of a toluidine blue indicator is added, and then a 0.1 mol/l-HCL aqueous solution is added to adjust the pH to 3.0. The prepared solution is titrated with 1/400 mol/l-PVSK standard solution. The end point is the point where colloids are generated and the color of the solution changes from blue to purple.

$$\text{Amine value (mmol/g-s)} = (c \times d)/(a \times b/100)$$

Here,

　　a: Collection amount of emulsion (g)
　　b: Solid content of emulsion (% by mass)
　　c: Concentration of PVSK (mol/l)
　　d: Titration amount of PVSK (ml)

(Particle size)

The emulsion composition was diluted with pure water so that the solid content was about 0.01% by mass, and the particle size was measured using a particle size distribution analyzer (OTSUKA ELECTRONICS CO., LTD. FPAR-1000, and the like) by a dynamic light scattering method.

(Minimum film formation temperature (MFT))

The emulsion composition was coated onto a glass plate placed on a heat gradient tester with an applicator so that the thickness thereof was 0.2 mm, and the temperature when the crack occurred (that is, MFT) was measured.

<Example 1>

(Preparation of emulsion including carboxy group-containing polymer particles)

Water: 157.7 g and SR-30 (reactive emulsifier, manufactured by ADEKA Corporation): 1.6 g were charged to a reactor having a volume of 0.5 L equipped with a thermometer, a reflux condenser, and a stirrer and heated to 75°C. Separately prepared pre-emulsion (made by filling water: 71.3 parts by mass, SR-30: 6.4 parts by mass, methacrylic acid: 28.8 parts by mass, methyl methacrylate: 28.8 parts by mass, styrene: 32.0 parts by mass, and butyl acrylate: 70.4 parts by mass into a plastic container and vigorously stirring, the concentration of a monomer: 70% by mass): 23.8 g and 2.6% by mass of potassium persulfate aqueous solution: 6.15 g were added and reaction was performed for 20 minutes. Then, while keeping the reaction temperature at 75°C to 85°C, pre-emulsion monomer: 213.9 g and 3% by mass of potassium persulfate aqueous solution: 18.46 g were added for 2.5 hours. After the addition of the pre-emulsion was completed, aging was performed at 80°C for 3 hours to obtain an emulsion including carboxy group-containing polymer particles (solid content: 40% by mass, content of carboxy groups: 2.00 mmol/g-s).

(Preparation of emulsion composition including amino group-containing polymer particles)

The obtained emulsion including the carboxy group-containing polymer particles: 80 g was transferred to a reactor having a volume of 0.3 L equipped with a thermometer, a reflux condenser, and a stirrer, water: 22.1 g was added, and heating was performed up to 30°C.

[First stage]

While keeping the reaction temperature at 30°C, 20% by mass of ethyleneimine (EI) aqueous solution: 4.6 g was added for 10 minutes. Then, the reaction temperature was raised from 30°C to 50°C for 10 minutes, and aging was performed at 50°C for 40 minutes.

[Second stage]

While keeping the reaction temperature at 50°C, 20% by mass of ethyleneimine aqueous solution: 4.6 g was added for 10 minutes and then aging was performed for 40 minutes.

[Third stage]

While keeping the reaction temperature at 50°C, 20% by mass of ethyleneimine aqueous solution: 4.6 g was added for 10 minutes, and then aging was performed for 1 hour. Then, the reaction temperature was raised to 60°C and aging was performed for 2 hours to obtain an emulsion composition including amino group-containing polymer particles (solid content: 30% by mass, amine value: 0.68 mmol/g-s).

<Example 2>

An emulsion composition including amino group-containing polymer particles was obtained (solid content: 30% by mass, amine value: 0.30 mmol/g-s) in the same manner as in Example 1 except that the composition of the pre-emulsion was water: 71.3 parts by mass, SR-30: 6.4 parts by mass, methacrylic acid: 14.4 parts by mass, methyl methacrylate: 43.2 parts by mass, styrene: 32.0 parts by mass, and butyl acrylate: 70.4 parts by mass, and each divided charging amount of 20% by mass of ethyleneimine aqueous solution was 2.3 g.

<Example 3>

An emulsion composition including amino group-containing polymer particles was obtained (solid content: 30% by mass, amine value: 0.16 mmol/g-s) in the same manner as in Example 1 except that the composition of the pre-emulsion was water: 71.3 parts by mass, SR-30: 6.4 parts by mass, methacrylic acid: 8.0 parts by mass, methyl methacrylate: 51.2 parts by mass, styrene: 32.0 parts by mass, and butyl acrylate: 68.8 parts by mass, and each divided charging amount of 20% by mass of ethyleneimine aqueous solution was 1.3 g.

<Example 4>

An emulsion composition including amino group-containing polymer particles was obtained (solid content: 30% by mass, amine value: 0.17 mmol/g-s) in the same manner as in Example 1 except that the composition of the pre-emulsion was water: 71.3 parts by mass, SR-30: 6.4 parts by mass, methacrylic acid: 14.4 parts by mass, methyl methacrylate: 61.6 parts by mass, butyl acrylate: 18.4 parts by mass, and butyl methacrylate: 65.6 parts by mass, and each divided charging amount of 20% by mass of ethyleneimine aqueous solution was 2.3 g.

<Example 5>

An emulsion composition including amino group-containing polymer particles was obtained (solid content: 30% by mass, amine value: 1.61 mmol/g-s) in the same manner as in Example 1 except that each divided charging amount of 20% by mass of ethyleneimine aqueous solution was 6.9 g.

<Example 6>

An emulsion composition including amino group-containing polymer particles was obtained (solid content: 30% by mass, amine value: 0.32 mmol/g-s) in the same manner as in Example 2 except that Antox MS-60 (manufactured by NIPPON NYUKAZAI CO., LTD.) was used as a reactive emulsifier.

<Example 7>

An emulsion composition including amino group-containing polymer particles was obtained (solid content: 30% by mass, amine value: 0.29 mmol/g-s) in the same manner as in Example 2 except that Aqualon KH-10 (manufactured by DKS Co. Ltd.) was used as a reactive emulsifier.

<Example 8>

An emulsion composition including amino group-containing polymer particles was obtained (solid content: 30% by mass, amine value: 0.33 mmol/g-s) in the same manner as in Example 2 except that LATEMUL PD-104 (manufactured by Kao Corporation) was used as a reactive emulsifier.

<Comparative Example 1>

An emulsion composition including amino group-containing polymer particles was obtained (solid content: 30% by mass, amine value: 0.81 mmol/g-s) in the same manner as in Example 1 except that HITENOL 18E (non-reactive emulsifier, manufactured by DKS Co. Ltd.) was used instead of SR-30 (reactive emulsifier, manufactured by ADEKA Corporation).

<Comparative Example 2>

(Preparation of carboxy group-containing polymer solution)

Methoxypropanol: 197.7 g was charged to a reactor having a volume of 0.5 L equipped with a thermometer, a reflux condenser, and a stirrer, and heated to 80°C. Premixed monomer component (methacrylic acid: 32.5 g, methyl methacrylate: 32.5, styrene: 36.1 g, butyl methacrylate: 79.3 g) was added thereto for 4 hours. At the same time, azoisobutyronitrile (AIBN): 4.4 g as a reactive activator was dividedly added at 7 times for 7 hours, and then aging was performed for 5.5 hours to obtain a carboxy group-containing polymer solution (solid content: 47% by mass, content of carboxy groups: 2.00 mmol/g-s).

(Addition of ethyleneimine)

After cooling the obtained carboxy group-containing polymer solution to 35°C, ethyleneimine: 27.7 g was added for 2.5 hours, and aging was performed at 40°C for 1 hour and at 75°C for 4 hours.

(Neutralization step)

While keeping the reaction temperature at 60°C or lower, 38% hydrochloric acid aqueous solution: 50 g was added for 2.5 hours, and then mixed for 2 hours to obtain an amino group-containing polymer solution (solid content: 49% by mass, amine value: 2.8 mmol/g-s).

The constituents of the emulsion compositions including the amino group-containing polymer particles prepared in Examples 1 to 8 and Comparative Example 1 and the amino group-containing polymer solution prepared in Comparative Example 2 are shown in Table 1 below.

[Table 1]

| No. | Emulsifier | Polymerization initiator | | Content of carboxyl group-containing polymer particles (mmol/g-s) | El addition molar equivalent (El/COOH) | Amine value | | Particle size (nm) | MFT (°C) |
| | | Type | Amount (% by mass/ monomer component) | | | Theoretical value (mmol/g-s) | Measurement value (mmol/g-s) | | |
|---|---|---|---|---|---|---|---|---|---|
| Example 1 | SR-30 | Potassium persulfate | 0.4 | 2.0 | 1.0 | 2.0 | 0.68 | 101 | 16 |
| Example 2 | SR-30 | Potassium persulfate | 0.4 | 1.0 | 1.0 | 1.0 | 0.30 | 89 | 28 |
| Example 3 | SR-30 | Potassium persulfate | 0.4 | 0.55 | 1.0 | 0.55 | 0.16 | 78 | 24 |
| Example 4 | SR-30 | Potassium persulfate | 0.4 | 1.0 | 1.0 | 1.0 | 0.17 | 109 | 45 |
| Example 5 | SR-30 | Potassium persulfate | 0.4 | 2.0 | 1.5 | 3.0 | 1.61 | 107 | 12 |
| Example 6 | Antox MS-60 | Potassium persulfate | 0.4 | 1.0 | 1.0 | 1.0 | 0.32 | 93 | 29 |
| Example 7 | Aqualon KH-10 | Potassium persulfate | 0.4 | 1.0 | 1.0 | 1.0 | 0.29 | 95 | 28 |
| Example 8 | LATEMUL PD-104 | Potassium persulfate | 0.4 | 1.0 | 1.0 | 1.0 | 0.33 | 88 | 29 |
| Comparative Example 1 | HITENOL 18E | Potassium persulfate | 0.4 | 2.0 | 1.0 | 2.0 | 0.81 | 105 | 20 |
| Comparative Example 2 | - | AIBN | 2.4 | 2.0 | 1.7 | 3.0 | 2.80 | - | - |

<Function evaluation>

(Evaluation of aggregate during reaction and storage stability)

• Aggregates during reaction

Immediately after preparation, each of the emulsion composition including amino group-containing polymer particles and the amino group-containing polymer solution was filtered through a 300 mesh stainless steel filter, and the mass of the aggregates was evaluated. As to the amount of aggregates/charged amount (solid content), 0.1% by mass or less was marked with "○", more than 0.1% by mass and 0.5% by mass or less was marked with "Δ", and more than 0.5% by mass was marked with " ×". The results are shown in Table 2.

• Appearance

Each of the emulsion composition including amino group-containing polymer particles and the amino group-containing polymer solution was stored in a hard glass bottle at room temperature and under a closed condition, and the presence or absence of aggregates was visually confirmed after the number of each elapsed day. The results are shown in Table 2.

(Evaluation of adhesion to substrates)

The emulsion composition including amino group-containing polymer or the amino group-containing polymer solution and titanium oxide were added so that each mass ratio (solid content) thereof is 7:3, water was then added so that the final solid content was 15% by mass, and mixing was performed thoroughly to prepare a pigment ink composition.
Using a bar coater (RDS-No. 8, WET film thickness: 20 μm), the pigment ink composition was applied to a stretched polypropylene film (OPP film) obtained by subjecting a surface thereof to a corona treatment, and dried under a condition of 80°C for 5 minutes to obtain a primer laminated film having a film thickness: 3.0 μm.
Subsequently, a cloth adhesive tape (Nichiban-102N) was pressure-bonded to the pigment ink coating film surface of the obtained primer laminated film by a roller, and then the peel strength was measured under a condition of an angle: 180° and a tensile speed: 300 mm/min.
In addition, the film after drying was immersed in ion-exchanged water at 25°C for 3 days and then dried under a condition of 80°C for 5 minutes, and the tensile strength was measured in the same manner as described above.
The devices used for the tensile test are as follows.

Motorized Test Stand MX-2-500N manufactured by IMADA Co., Ltd.
Force Gauge ZTA-50N manufactured by IMADA Co., Ltd.

The results are shown in Table 2.
Note that, when the same test was performed on the primer laminated film obtained from the emulsion composition alone, it was confirmed that the primer laminated film exhibited higher adhesion ability than that of the pigment ink composition.

(Evaluation of water resistance and solvent resistance)

The following primer compositions (1), (2) and (3) were prepared, and the water resistance and solvent resistance after film formation were evaluated. Note that the mass ratios of each composition are shown in Table 2.

(1) An emulsion composition including amino group-containing polymer particles or an amino group-containing polymer solution (solid content: 30% by mass) was diluted with water to prepare so as to be 20% by mass of a solid content.
(2) An emulsion composition including amino group-containing polymer particles or an amino group-containing polymer solution and a bisphenol A type epoxy emulsion (solid content: 67% by mass, epoxy value: 3.64 mmol/g-s, product name: jER W3435R67, Mitsubishi Chemical Corporation) were added so that an equivalence ratio of an amine group (theoretical value) of the emulsion composition including amino group-containing polymer particles or an amino group-containing polymer solution to an epoxy group of an epoxy resin is equivalent, and the water was further added to prepare so as to be 20% by mass of a solid content.
(3) An emulsion composition including amino group-containing polymer particles or an amino group-containing polymer solution and ethylene glycol diglycidyl ether (solid content: 100%, epoxy value: 7.58 mmol/g-s, product name: DENACOL EX-811, Nagase ChemteX Corporation) were added so that an equivalence ratio of an amine group (theoretical value) of the emulsion composition including amino group-containing polymer particles or an amino group-containing polymer solution to an epoxy group of an epoxy resin is equivalent, and the water was further added to prepare so as to be 20% by mass of a solid content.

2.5 mL of the above composition was poured into a PTFE mold (50 mm × 50 mm) (WET film thickness: 1000 $\mu$m) and dried under a condition of 80°C for 72 hours to obtain a film having a film thickness: 200 $\mu$m.

The obtained film was cut into small pieces of 10 mm × 10 mm to immerse in water or acetone at 25°C for 3 days, and evaluated with the volume change rate from the mass measurement value and the appearance change by visual observation before and after being immersed. The results are shown in Table 2.

◎: Weight change was 10% by mass or less, no discoloration and bending were observed.

○: Weight change is 20% by mass or less, discoloration and bending were slightly observed.

Δ : Weight change is 40% by mass or less, discoloration and bending were observed.

× : Weight change exceeds 40% by mass.

[Table 2]

| Item | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| (Stability) Aggregate during reaction | | ○ | ○ | ○ | ○ | ○ | ○ | ○ | ○ | △ | ○ |
| Appearance | Immediately after reaction | ○ | ○ | ○ | ○ | ○ | ○ | ○ | ○ | ○ | ○ |
| | After 7 days | ○ | ○ | ○ | ○ | ○ | ○ | ○ | ○ | ○ | ○ |
| | After 30 days | ○ | ○ | ○ | ○ | ○ | ○ | ○ | ○ | △ | ○ |
| (Adhesion to Tensile strength substrate) | Immediately after film formation | 8.4 N | 14.6 N | 16.4 N | 9.7 N | 7.8 N | 15.2 N | 14.5 N | 14.8 N | 5.4 N | 5.8 N |
| | After 3 days of immersion | 8.4 N | 9.9 N | 9.7 N | 9.6 N | 8.1 N | 9.6 N | 9.8 N | 9.5 N | 6.4 N | - |
| (Water resistance and solvent resistance) Base resin | Water resistance | △ | △ | ◎ | ◎ | △ | △ | △ | △ | △ | × |
| | Solvent resistance | △ | △ | ○ | ○ | △ | △ | △ | △ | △ | × |
| Base resin +Aromatic polyvalent epoxy | Base resin (Parts by weight) | 100 | 100 | 100 | 100 | 100 | 100 | 100 | 100 | 100 | 100 |
| | Epoxy (Parts by weight) | 25 | 12 | 7 | 12 | 37 | 12 | 12 | 12 | 25 | 35 |
| | Water resistance | △ | ◎ | ○ | ◎ | △ | ◎ | ○ | ◎ | △ | △ |
| | Solvent resistance | ○ | ◎ | ◎ | ◎ | △ | ◎ | ◎ | ◎ | △ | △ |
| Base resin +Aliphatic polyvalent epoxy | | | | | | | | | | | |

EP 4 059 967 A1

| Item | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| | Base resin (Parts by weight) | 100 | 100 | 100 | 100 | 100 | 100 | 100 | 100 | 100 | 100 |
| | Epoxy (Parts by weight) | 8 | 4 | 2 | 4 | 12 | 4 | 4 | 4 | 8 | 8 |
| | Water resistance | o | ◎ | ◎ | ◎ | o | ◎ | ◎ | ◎ | o | o |
| | Solvent resistance | o | ◎ | ◎ | ◎ | o | ◎ | ◎ | ◎ | o | o |

From Table 2, in Example 1, there were few aggregates during production, storage stability was good, and excellent adhesion was exhibited in the peeling test immediately after film formation and after immersion, and excellent water resistance and solvent resistance were also exhibited. On the other hand, in Comparative Example 1 in which the reactive emulsifier was not used, the generation of aggregates during production was confirmed, and further, the decrease in adhesion strength was confirmed in the peeling test after immersion. This indicates that the stability of the emulsion is good and the water resistance and solvent resistance are enhanced by using the reactive emulsifier.

In addition, as shown in Examples 1 to 8, it was confirmed that even in the case where the amount of the carboxy groups included in the carboxyl group-containing polymer particles was different, excellent adhesion was exhibited and the emulsion had higher water resistance and solvent resistance.

From the above results, it can be understood that, as to the emulsion composition including the amino group-containing polymer according to the present invention, there were few aggregates during production, storage stability was good and moreover, adhesion to substrates is high, and the obtained film formation has excellent water resistance and solvent resistance.

The present application is based on the Japanese Patent Application No. 2019-204992 filed on November 12, 2019. The disclosed of which is incorporated herein by reference in its entirety.

## Claims

1. An emulsion composition comprising amino group-containing polymer particles, wherein the amino group-containing polymer particles are obtained by modifying carboxyl group-containing polymer particles with alkyleneimine, and wherein the carboxyl group-containing polymer particles are obtained by emulsion polymerization of a monomer component including at least one monomer selected from unsaturated carboxylic acids with a reactive emulsifier.

2. The emulsion composition according to claim 1, wherein
an amount of the reactive emulsifier is 2 to 10 parts by mass with respect to 100 parts by mass of the monomer component.

3. The emulsion composition according to claim 1 or 2, wherein
a content of carboxyl groups included in the carboxyl group-containing polymer particles is 0.3 to 3.0 mmol/g.

4. The emulsion composition according to any one of claims 1 to 3, wherein
an equivalent amount of the alkyleneimine to an equivalent amount of carboxyl groups included in the carboxyl group-containing polymer particles is 0.5 to 2.0.

5. The emulsion composition according to any one of claims 1 to 4, wherein
the emulsion composition is used as a primer.

6. The emulsion composition according to any one of claims 1 to 4, wherein
the emulsion composition is used as an aqueous adhesive.

7. The emulsion composition according to any one of claims 1 to 4, wherein
the emulsion composition is used as a pressure-sensitive adhesive.

8. The emulsion composition according to any one of claims 1 to 4, wherein
the emulsion composition is used as a paint.

9. A method for producing an emulsion composition, comprising the steps of:

emulsion-polymerizing a monomer component including at least one monomer selected from unsaturated carboxylic acids with a reactive emulsifier to prepare carboxyl group-containing polymer particles; and
modifying the carboxyl group-containing polymer particles with alkyleneimine to prepare amino group-containing polymer particles.

**INTERNATIONAL SEARCH REPORT**

International application No.

PCT/JP2020/041876

### A. CLASSIFICATION OF SUBJECT MATTER

C08F 8/30(2006.01)i; C08F 2/24(2006.01)i; C08F 20/04(2006.01)i; C09D 5/00(2006.01)i; C09D 5/02(2006.01)i; C09D 133/02(2006.01)i; C09J 133/02(2006.01)i

FI: C08F8/30; C08F20/04; C08F2/24 A; C09D5/02; C09D133/02; C09D5/00 D; C09J133/02

According to International Patent Classification (IPC) or to both national classification and IPC

### B. FIELDS SEARCHED

Minimum documentation searched (classification system followed by classification symbols)

C08F8/30; C08F2/24; C08F20/04; C09D5/00; C09D5/02; C09D133/02; C09J133/02

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>A | JP 6-25630 A (IPPOSHA OIL INDUSTRIES CO., LTD.) 01 February 1994 (1994-02-01) claims, paragraphs [0010]-[0012], examples | 1-4, 6-9<br>5 |
| A | JP 2003-192722 A (NIPPON SHOKUBAI CO., LTD.) 09 July 2003 (2003-07-09) | 1-9 |
| A | JP 51-92837 A (DAINIPPON INK AND CHEMICALS, INCORPORATED) 14 August 1976 (1976-08-14) | 1-9 |
| A | JP 6-370 A (NIPPON SHOKUBAI CO., LTD.) 11 January 1994 (1994-01-11) | 1-9 |
| A | JP 62-41265 A (NIPPON OIL & FATS CO., LTD.) 23 February 1987 (1987-02-23) | 1-9 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 14 January 2021 (14.01.2021) | 26 January 2021 (26.01.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT

Information on patent family members

| International application No. |
| --- |
| PCT/JP2020/041876 |

| Patent Documents referred in the Report | Publication Date | Patent Family | Publication Date |
| --- | --- | --- | --- |
| JP 6-25630 A | 01 Feb. 1994 | (Family: none) | |
| JP 2003-192722 A | 09 Jul. 2003 | (Family: none) | |
| JP 51-92837 A | 14 Aug. 1976 | (Family: none) | |
| JP 6-370 A | 11 Jan. 1994 | (Family: none) | |
| JP 62-41265 A | 23 Feb. 1987 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S4630946 A
- JP 5117618 A
- JP 6220395 A
- JP 2019204992 A